# EUROPEAN PATENT SPECIFICATION

(11) **EP 3 116 828 B1**
(45) Date of publication and mention of the grant of the patent: **06.11.2019**
(21) Application number: 15717267.7
(22) Date of filing: 04.03.2015
(51) Int. Cl.: C01B 25/37, C01B 25/45, H01M 4/58

(54) **PROCESS OF FABRICATION OF CRYSTALLINE NANOMETRIC LITHIUM TRANSITION METAL PHOSPHATE**
VERFAHREN ZUR HERSTELLUNG VON KRISTALLINEM NANOMETRISCHEM LITHIUM-ÜBERGANGSMETALL-PHOSPHAT
PROCÉDÉ DE FABRICATION D'UN PHOSPHATE NANOMÉTRIQUE CRISTALLIN DE LITHIUM ET D'UN MÉTAL DE TRANSITION

(30) Priority: 12.03.2014 PL 40750614
(43) Date of publication of application: 18.01.2017
(73) Proprietor: Akademia Gorniczo-Hutnicza im. Stanislawa Staszica w Krakowie, 30-059 Krakow (PL)
(72) Inventor: MOLENDA, Janina, PL-32-048 Jerzmanowice (PL); ZAJAC, Wojciech, PL-43-603 Jaworzno (PL); KULKA, Andrzej, PL-31-235 Kraków (PL)
(74) Representative: Magonska, Alina
(86) International application number: PCT/PL2015/000037
(87) International publication number: WO 2015/137836

(56) References cited:
- US-A1- 2004 151 649
- US-A1- 2009 117 020
- DATABASE WPI Week 201377 Thomson Scientific, London, GB; AN 2013-H55081 XP002740411, -& CN 102 838 102 A (UNIV ZHEJIANG) 26 December 2012 (2012-12-26)
- DATABASE WPI Week 201402 Thomson Scientific, London, GB; AN 2013-E81567 XP002740412, -& CN 102 842 716 A (UNIV SHANGHAI JIAOTONG) 26 December 2012 (2012-12-26)

## Description

This invention relates to a process of fabrication of crystalline nanometric lithium transition metal phosphate, particularly LiFePO₄, which is intended for a cathode material in reversible Li-ion batteries (Li-ion cells), suitable to provide more than 2.5 V of output voltage.

Reversible Li-ion batteries are widely used in portable electronics and more recently in powering electric vehicles. Li-ion cells consist of a cathode, a graphitic anode and, separating them, an electrolyte conducting lithium ions. The basic operational parameters of a Li-ion cell, such as voltage, current and power density, depend mainly on the cathode material used. Commonly used cathode materials include layered oxides such as LiCoO₂ or oxides possessing a spinel structure, i.e. LiMn₂O₄. However, these materials are expensive to fabricate and harmful to the environment, and may become degraded during operation.

U.S. patent US 5,910,382 presents compounds, which contain in their structures PO₄³⁻ polyanions and transition metal cations, which can be applied as cathode materials for Li-ion batteries. Among them, lithium iron phosphate LiFePO₄ with an olivine crystal structure has the most favourable properties. It possesses high (compared to lithium metal) operational voltage of about 3.4 V and high theoretical capacity equal to about 170 mAh/g; additionally, this material exhibits high chemical and thermal stability, is environmentally benign and cheap to fabricate. The listed physicochemical properties make this material particularly advantageous for application in Li-ion cells intended for electric vehicles, where safety issues are crucial. However, it exhibits extremely low mixed ionic-electronic conductivity at the temperatures at which a Li-ion cell operates, which strongly inhibits charge transport in the cathode layer. These limitations prevent this material from being used directly in Li-ion batteries with high current and energy densities.
It is known, from patent application CN102838102 A the preparation method for nano-scale lithium iron phosphate. The invention utilizes solvothermal reaction performed in temperature between 160 and 240 degree centigrade. The precursor solvent comprises ethylene glycol and water. The process comprises of sequential dissolving ascorbic acid, phosphoric acid, ferrous sulfate hexahydrate in mixed solvent, adding lithium hydroxide dissolved in ethylene glycol and water and the polyethylene glycol and the performing solvothermal reaction to obtain lithium iron phosphate monocrystalline nanorods. Distinct feature of said method is the solvothermal treatment step and the temperature in which reaction is performed (said 160-240 degree centigrade) and the type of the applied antioxidant. A solvothermal treatment requires advanced reactors to bear autogenous pressure at temperatures exceeding boiling point of the solvent.
It is known, from patent application CN102842716 A preparation method for nanoscale lithium iron phosphate which consist of preparing water solution containing glucose and lithium hydroxide, adding phosphoric acids and then ferrous sulphate, then heating sealed container with said mixture in temperature of ca. 600 degree centigrade. Distinct features of said method are: using microwaves for heating process and high temperature of such heating (said 600°C) and using high-pressure sealed reactor and the type of the applied additives. Sealed microwave reactors, despite being very efficient in direct transfer of energy to the solvent and reacting mixture, are costly and challenging if a process is to be scaled up for large scale production.
It is known from patent application US 2009/0117020 a method of hydrothermal or solvothermal formation of nanostructured LiₓM_{y}PO₄ in a sealed microwave reactor at temperature of 300°C (Example 1 and Example 2). The process takes place in aqueous and non-aqueous solutions in the presence or absence of carbon precursor, where M is one is one of the following metals: Fe, Mn, Co, Ti, Ni, Cu,V, Mo, Zn, Mg, Cr, Al, Ga, B, Zr, Nb, or combination of thereof and x is between 0 and 1 and y is between 0.8 and 1.2. Also it is known that the presence of glucose in the reacting mixture results in deposition of carbon film on precipitated nanoparticles ("in situ carbon coating") by microwave hydrothermal carbonization followed by heating at 700°C. Sealed microwave reactors, despite being very efficient in direct transfer of energy to the solvent and reacting mixture, are costly and challenging if a process is to be scaled up for large scale production.
It is known from patent application US 2004/0151649 the method of obtaining lithium phosphates of general formula of Li(FeₓM1_{y}M2_{z})PO₄ wherein M1 represents at least one element of the group comprising Sc, Ti, V, Cr, Mn, Co, Ni, Cu, Zn, Be, Mg, Ca, Sr, Ba, Al, Zr, and La; M2 represents at least one element of the group comprising Sc, Ti, V, Cr, Mn, Co, Ni, Cu, Zn, Be, Mg, Ca, Sr, Ba, Al, Zr, and La; x=between 0.5 and 1, y=between 0 and 0.5, z=between 0 and 0.5, provided that x+y+z=1, or x=0, y =1 and z=0. The method comprises of three steps: (i) precipitating precursor compounds of elements Li, Fe, M1 and/or M2 from aqueous solutions, then (ii) drying the product in inert gas atmosphere or reducing atmosphere at temperature between room temperature and 200 degree centigrade, and then (iii) tempering the product in temperature 300-1000 degree centigrade. The distinct feature of the invention disclosed in US 2004/0151649 is the multi-step process containing final tempering step in inert or reducing atmosphere at temperatures between 300 and 1000 degree centigrade.

Many laboratories conduct research devoted to the improvement of the electrochemical properties of LiFePO₄. This research is focused on the development of a LiFePO₄/carbon composite cathode and preparation of materials with smaller grain sizes, which can shorten the lithium diffusion distance while charging and discharging. Additionally, experimental and theoretical work has revealed that lithium ion transport in this material can occur only along the [010] crystallographic direction [D. Morgan, A. Van der Ven, and G. Ceder, Electrochemical and Solid-State Letters 7 (2004) A30-A32 and R. Amin, P. Balaya, J. Maier, Electrochemical and Solid-State Letters, 10 (2007) A13-A16]. Consequently, it is highly beneficial to conduct synthesis leading to LiFePO₄ with nanometric grains possessing exposed [010] planes. [W. Zajac, J. Marzec, W. Maziarz, A. Rakowska, J. Molenda, Functional Materials Letters 4 (2011) 117-122].

In patents [patent applications: WO2010149681 A1, WO2011100487 A2, WO2010023194 A1 and WO2011057646 A1] and in research papers [M. K. Devaraju, I. Honma, Advanced Engineering Materials 2 (2012) 284-297 and A. V. Murugan, T. Muraliganth, A. Manthiram, Electrochemistry Communications 10 (2008) 903-906] several synthesis methods leading to material with nanosize grains, including LiFePO₄, were presented. One method of preparation of nanometric phospho-olivine is the introduction of carbon precursors such as sucrose which pyrolyse during thermal treatment at high temperatures in a non-oxidative atmosphere (e.g. 700°C, argon) and reduce grain growth [patent application WO2010149681 A1] into the mixture of reactants, e.g. Li₂CO₃ + FeC₂O₄ + NH₄H₂PO₄, during high-temperature synthesis. On the other hand, applying 'soft chemistry' methods, among others the hydrothermal method [M. K. Devaraju, I. Honma, Advanced Engineering Materials 2 (2012) 284-297] or the co-precipitation method [W. Zajac, J. Marzec, W. Maziarz, A. Rakowska, J. Molenda, Functional Materials Letters 4 (2011) 117-122], enables reduction of the LiFePO₄ synthesis temperature, which leads to elimination of the grain growth process occurring at higher temperatures and reduces costs associated with obtaining high temperatures.

Among the procedures of synthesis of nanometric LiFePO₄ described in the literature, the method proposed by Delacourt et al. [C. Delacourt, C. Wurm, P. Reale, M. Morcrette, C. Masquelier, Solid State Ionics 173 (2004) 113-118 and patent application EP1899268 B1] seems particularly interesting, but possesses considerable limitations. This method is based on the co-precipitation reaction of nanometric LiFePO₄ from LiOH, FeSO₄ and H₃PO₄ solutions composed of water and organic liquids. In Delacourt's method, at room temperature, dimethyl sulfoxide (DMSO) was gradually added to an aqueous solution containing 0,1-molar solutions of Fe²⁺ and P0₄³⁻ ions, until the mixture contained 50 vol.% water and 50 vol.% DMSO. Then, 0,3 mol Li⁺ ion solution was added to the obtained mixture until the pH of the latter was within the range 7-7.5 and the molar ratios Li:Fe:P were close to 3:1:1. Subsequently, the mixture was heated, reaching the boiling temperature of the solvent, i.e. between 105 and 120°C. The obtained precipitate was filtered, flushed with distilled water, and, in the final step, annealed at a temperature of 500°C for 3 h in an atmosphere of nitrogen with 5% hydrogen. As the main limitation of this method, one might cite the relatively large number of Fe(III) ions in the cathode material after co-precipitation, leading to the necessity of additional heat treatment in a reductive atmosphere at temperatures above 200°C. Another drawback of this method is an increase in the fabrication costs of the cathode material related to the multi-step procedure, as well as the growth of LiFePO₄ grains, which is inevitable at high temperatures.

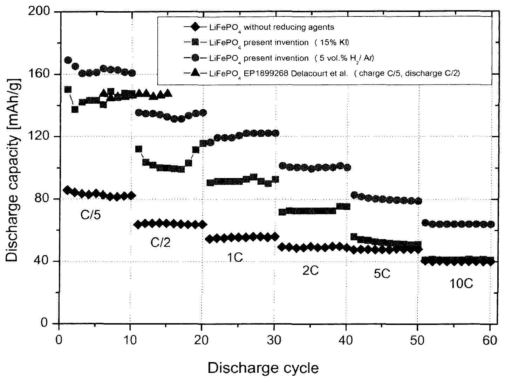

The essence of the synthesis procedure of nanometric lithium transition metal phosphate with the chemical formula LiMPO₄ (where M denotes a transition metal ion or mixture of transition metal ions selected from Fe, Mn, Co and Ni, particularly LiFePO₄), using co-precipitation of nanometric powder to get a precipitate from boiling solution, consisting of water and organic liquid, containing Li⁺, M²⁺ and PO₄³⁻ ions, which, after being filtered and flushed with water as well as ethanol, is dried, is that to a boiling solution a reducing agent, being at least one of the substances from a group comprising potassium iodide, ammonium thiosulphate and tin(II) chloride, with a molar quantity ranging from 15 to 100 mol.% in relation to the quantity of transition metal ions is introduced ,and/or a reductive gas mixture is passed through this solution.
Advantageously, potassium iodide introduced to the solution, containing Fe²⁺ ions at 15 mol.% in relation to their quantity, is used as a reducing agent.
Advantageously, a mixture containing argon with the addition of 5 vol.% of hydrogen is used as a reducing gas mixture .
Surprisingly, it turned out that the introduction of the reducing agent into the solution from which nanometric LiMPO₄ powder is precipitated hampers the oxidation of M²⁺ ions to M³⁺ ions, and additionally enables the elimination of the final step of annealing the obtained powder in non-oxidative conditions. Additionally, application of a reducing agent enables a reduction in the amount of transition metal (III) in the obtained material from about 25 to about 12 wt.%.
The process according to the invention is advantageous, because the procedure of synthesis of LiMPO₄ powder can be completed in a single course of action. Furthermore, the synthesised LiMPO₄ powder is carbon-free, shows a lesser content of M³⁺ ions, and features fine grain-size within the range of 30-200nm. Additionally, the powder obtained according to this process can be directly used as a cathode material in reversible Li-ion cells. The process enables improvement of the reversible capacity of cells constructed using the obtained material and reduction of production costs associated with elimination of the final step, which comprises annealing the material at high temperatures.
The present invention is illustrated in examples and in a drawing which presents discharge capacity in the following cycles under various discharge rates of Li/Li⁺/LiFePO₄ cells with cathodes made from olivine materials obtained by co-precipitation, and with potassium iodide in 15 vol.% quantity in relation to the quantity of the iron ions or a gaseous mixture comprising 95 vol.% Ar and 5 vol.% hydrogen used as a reducing agent. The C/n symbol denotes the current density necessary to change lithium in the amount of 1 mol per mol of the cathode material within n hours; the nC symbol denotes the current density necessary to change lithium in the amount of 1 mol per mol of the cathode material within 1/*n* hours. For the sake of comparison, examinations were conducted of cells with cathodes containing material obtained without the
addition of any reducing agent. The figure presents discharge capacities in the following cycles under various discharge rates of the Li/Li⁺/LiFePO₄ cells with cathodes made from cathode material disclosed in patent EP 1899268.

### Example I

In order to prepare 3.2 g crystalline nanometric powder of LiFePO₄, initially three solutions were prepared; solution 1 was obtained by mixing 1.36 cm³ 85% aqueous solution of H₃PO₄ with 100 cm³ of distilled water and 100 cm³ of ethylene glycol in a reactor with a volume of 2000 ml with a reflux condenser. Next, solution 2 was prepared by dissolving 0.498 g Kl in 100 cm³ of boiling distilled water; then 5.5601 g of FeSO₄·7H₂O and 100 cm³ of ethylene glycol were added, in which the amount of Kl was equal to 15 mol.% in relation to Fe²⁺ ions. Later, solution 3 was prepared by dissolving 2.5174 g LiOH·H₂O in 100 cm³ of boiling distilled water; next, 100 cm³ of ethylene glycol was added. All solutions were heated to the boiling point; solution 2 (boiling) was introduced to the reactor and, after solutions 1 and 2 had been mixed, solution 3 was introduced at a rate of 15 ml/min. During the introduction of solution 3, a grey-green precipitate appeared. The reacting mixture was left in the reactor for 16 hours at boiling temperature under a reflux condenser. Next, the reaction mixture was cooled to room temperature and the precipitate was filtered from the solution using a Büchner funnel and washed three times with distilled water and three times with isopropyl alcohol. Next the filtered precipitate was dried in a vacuum dryer at 70°C for 12 hours to obtain a crystalline nanometric LiFePO₄ powder with an olivine structure and Fe(III) content of 19.5 wt.%; the crystallite size of the obtained cathode material was 30-200 nm and the yield of the synthesis was over 90%.

### Example II

In order to prepare 3.2 g crystalline nanometric powder of LiFePO₄, initally three solutions were prepared; solution 1 was obtained by mixing 1.36 cm³ 85% aqueous solution of H₃PO₄ with 100 cm³ of distilled water and 100 cm³ of ethylene glycol in a reactor with a volume of 2000 ml with a reflux condenser. Solution 1 was heated to the boiling point and a gas mixture composed of argon and 5 vol.% of hydrogen was passed through it for 40 minutes at a rate of 50 ml/min. Next, solution 2was prepared by dissolving 5.5601 g of FeSO₄·7H₂O in 100 cm³ of boiling distilled water and 100 cm³ of ethylene glycol. Later, solution 3 was prepared by dissolving 2.5174 g LiOH·H₂O in 100 cm³ of boiling distilled water; next, 100 cm³ of ethylene glycol was added. Solution 2 (boiling) was introduced into the reactor containing solution 1 (boiling), through which a gas mixture composed of argon and 5 vol.% of hydrogen was passed at a rate of 50 ml/min; then solution 3 (boiling) was introduced at a rate of 15 ml/min. During the introduction of solution 3, a grey-green precipitate appeared. The reacting mixture was left in the reactor for 16 hours at boiling temperature under a reflux condenser with a continuous flow of the gas mixture. Next, the reaction mixture was cooled to room temperature and the precipitate was filtered from the solution using a Büchner funnel and washed three times with distilled water and three times with isopropyl alcohol. Next, the filtered precipitate was dried in a vacuum dryer at 70°C for 12 hours to obtain crystalline nanometric LiFePO₄ powder with an olivine structure and a Fe(III) content of 12.0 wt.%; the crystallite size of the obtained cathode material was 30-200 nm and the yield of the synthesis was over 90%.

## Claims

1. A process of fabrication of nanometric lithium transition metal phosphate with the general formula LiMPO₄, where M denotes an element or mixture of elements selected from Fe, Mn, Co, and Ni, particularly LiFePO₄, using a co-precipitation method to get a precipitate from a boiling solution , consisting of water and organic liquid, containing Li⁺, M²⁺ PO₄³⁻ ions, which, after filtering and washing with distilled water and alcohol, is dried, **characterised in that**, to the boiling solution a reducing agent, being at least one of the substances from a group comprising potassium iodide, ammonium thiosulphate and tin(II) chloride, is introduced in the amount of 10-100 mol.% in relation to transition metal ions, and/or a reducing gas mixture is passed through the solution.

2. The process described in claim 1 is **characterised by** the fact that potassium iodide is introduced to the solution containing Fe²⁺ions in the amount of 15 mol.% as the reducing agent.

3. The process described in claim 1 is **characterised by** the fact that an argon-hydrogen mixture is applied as a reducing gas mixture.

4. The process described in claim 3 is **characterised by** the fact that the mixture contains 5 vol.% of hydrogen.

## Patentansprüche

1. Verfahren zur Herstellung von nanometrischem Lithium-Übergangsmetallphosphat mit der Hauptformel LiMPO₄, wobei M ein Element oder eine Mischung von Elementen bezeichnet, ausgewählt aus Fe, Mn, Co und Ni, insbesondere LiFePO₄, unter Verwendung eines begleitenden Fällungsverfahrens, um aus einer siedenden Lösung einen Niederschlag zu erhalten, bestehend aus Wasser und organischer Flüssigkeit mit Li⁺, M²⁺, PO₄³⁻ Ionen, die nach dem Filtern und Waschen mit destilliertem Wasser und Alkohol getrocknet werden, **dadurch gekennzeichnet, dass** zur siedenden Lösung ein Reduktionsmittel, das mindestens eine der Substanzen aus einer Gruppe ist, die Kaliumiodid, Ammonium-Thiosulfat und Zinn(II)-Chlorid umfasst, in einer Menge von 10-100 Mol % in Bezug auf Übergangs-Metall-Ionen eingeführt und/oder ein Reduktionsgasgemisch durch die Lösung geleitet wird.

2. Das in Anspruch 1 beschriebene Verfahren ist **dadurch gekennzeichnet, dass** Kaliumiodid in die Lösung eingebracht wird, die Fe²⁺ Ionen in einer Menge von 15 Mol-% als Reduktionsmittel enthält.

3. Das in Anspruch 1 beschriebene Verfahren ist **dadurch gekennzeichnet, dass** ein Argon-Wasserstoff-Gemisch als Reduktionsgasgemisch angewendet wird.

4. Das in Anspruch 3 beschriebene Verfahren ist **dadurch gekennzeichnet, dass** das Gemisch 5 % Wasserstoff enthält.

## Revendications

1. Un processus de fabrication du phosphate de lithium de métaux de transition à l'échelle nanométrique avec la formule générale de type LiMPO₄, où M désigne un élément ou mélange d'éléments choisis à partir de Fe, Mn, Co et Ni, et notamment LiFePO₄, à l'aide d'un procédé de coprécipitation dans l'objectif d'obtenir un précipité à partir d'une solution bouillante, composée de l'eau et d'un liquide organique contenant des ions Li⁺, M²⁺ PO₄³⁻, qui après filtration et lavage avec de l'eau distillée et de l'alcool, est séché, **caractérisé en ce qu'**un agent réducteur, étant au moins l'une des substances d'un groupe composé de l'iodure de potassium, thiosulfate d'ammonium et chlorure d'étain(II) est introduit dans la solution bouillante en quantité de 10 à 100 mol. % en relation avec les ions métalliques de transition et/ou un mélange de gaz réducteur est passé à travers la solution.

2. Le processus décrit dans la revendication 1 est **caractérisé par le fait que** l'iodure de potassium est introduit dans la solution contenant des ions Fe²⁺ en quantité de 15 mol. % en tant qu'agent réducteur.

3. Le processus décrit dans la revendication 1 est **caractérisé par le fait que** le mélange d'argon et d'hydrogène est utilisé comme mélange de gaz réducteur.

4. Le processus décrit dans la revendication 3 est **caractérisé par le fait que** le mélange contient 5 vol. % d'hydrogène.
